# EUROPEAN PATENT APPLICATION

(11) **EP 4 417 369 A1**
(43) Date of publication of application: **21.08.2024**
(21) Application number: 23157552.3
(22) Date of filing: 20.02.2023
(51) Int. Cl.: B25B 23/04, B25C 1/00, B25F 5/00, G05B 19/418

(54) **TOOL, METHOD OF OPERATING A TOOL, AND CONSUMABLE**

(71) Applicant: Hilti Aktiengesellschaft, 9494 Schaan (LI)
(72) Inventor: Michalski, Tomasz Dobromir, 9470 Buchs (CH); Heiss, Marco, 6800 Feldkirch (AT); Herrero Fernandez, Joaquin, 86150 Augsburg (DE); Grazioli, Mario, 7000 Chur (CH); Bertsch, Klaus, 6820 Frastanz (AT)
(74) Representative: Hilti Aktiengesellschaft Corporate Intellectual Property

(57) **Abstract**

Disclosed is a method of operating a tool that comprises a receptacle configured to temporarily receive a consumable, and a feed channel configured to guide consumables into the receptacle, is disclosed. The method includes transmitting an energy wave onto a consumable located in the feed channel or in the receptacle, receiving a response wave emitted by the consumable upon exposure to the energy wave, generating a signal indicative of the response wave, recognizing a type of the consumable upon receipt of the signal and controlling an operation of the tool in dependence of the recognized type of the consumable.

## Description

### Background of the Invention

The invention relates to a tool that temporarily holds a consumable within a receptacle. Further, the invention relates to a method of operating such a tool and to a consumable to be received in such a tool. Tools are known which have a control device for controlling the operation of the tool. The control of the operation is usually done in dependance of switch positions of switches, which are operated for example by a user of the tool, or on the basis of sensor data for example of temperature, pressure, humidity, speed or similar sensors. It may be desirable to further automate the control of the operation of the tool.

One constraint with a tool using consumables is that most such tools are capable of performing with consumables of different types, e.g. consumables of different size. Selecting an improper consumable may result in increased tool stress, misfunction of the tool, or even a hazard for a user of the tool.

### Brief Summary of the Invention

The above constraints are addressed by a tool comprising a receptacle configured to temporarily receive a consumable, a feed channel configured to guide consumables into the receptacle, a controller configured to control an operation of the tool, a transmitter configured to transmit an energy wave onto a consumable located in the feed channel or in the receptacle, a receiver configured to receive a response wave emitted by the consumable upon exposure to the energy wave and to generate a signal indicative of the response wave, a signal line configured to transmit the signal from the receiver to the controller, wherein the controller is configured to recognize a type of the consumable upon receipt of the signal and to at least one of control the operation of the tool in dependence of the recognized type of the consumable and store the recognized type of the consumable in a data storage. In some embodiments, the tool is a handheld tool. In further embodiments, the controller comprises a microprocessor arranged on an electronic board, such as a control board. In other embodiments, the tool comprises the data storage. Alternatively or additionally, the controller stores the recognized type of the consumable in an external data storage.

In a preferred embodiment, the controller is configured to derive a modification of the response wave with respect to the energy wave from the signal and to assign the modification to the type of the consumable. To this end, the controller may analogously or digitally process the signal according to an identification algorithm program installed on the controller. The modification may be a change of wave form, magnitude or wavelength.

In another preferred embodiment, the receiver comprises an electromagnetic sensor, such as an optical sensor, a Hall effect sensor, an inductive sensor, measuring coil, or an electric field probe. In another preferred embodiment, the receiver comprises an acoustical sensor.

In another preferred embodiment, the controller is configured to operate the tool at reduced power or to prevent or abort operation of the tool if the type of the consumable is not recognized.

In another preferred embodiment, the tool further comprises an output device configured to output the recognized type of the consumable and/or a number of consumables left, a depletion state or a replenishment request. The output device may comprise at least one of a display, a LED, a buzzer, and a wireless transmitter, such as Bluetooth, NFC, infrared, WLAN, Wi-Fi, GPS, and a data storage readable by an external device. The outputted information may be sent to a user of the tool or a manufacturer or retailer of the tool or to a database server, such as a cloud server.

The above constraints are further addressed by a method of operating a tool that comprises a receptacle configured to temporarily receive a consumable, and a feed channel configured to guide consumables into the receptacle. The method comprises transmitting an energy wave onto a consumable located in the feed channel or in the receptacle, receiving a response wave emitted by the consumable upon exposure to the energy wave, generating a signal indicative of the response wave, recognizing a type of the consumable upon receipt of the signal and at least one of controlling an operation of the tool in dependence of the recognized type of the consumable and storing the recognized type of the consumable in a data storage. Controlling the operation of the tool may include automatically adjusting and/or regulating a voltage, an amperage, a power, an energy, a speed, or a frequency. The recognized type of the consumable may include a size, such as a length, of the consumable, or an application which the consumable is configured to be used for.

In a preferred embodiment, the tool is a driving tool having a driving piston and an actuating device configured to actuate the driving piston such that the driving piston drives a fastening element into a substrate. Controlling the operation of the tool may then include automatically adjusting and/or regulating a driving energy, i.e. the amount of energy transferred to the fastening element during a driving stroke.

In a preferred embodiment, the method further comprises outputting the recognized type of the consumable. Outputting the recognized type of the consumable may comprise acoustically and/or optically displaying the information, wirelessly transmitting the information, or storing the information in a data storage and reading the information from the data storage, e.g. by an external device.

The above constraints are further addressed by a consumable configured to be used in a tool as described above, comprising a wave modifier configured to emit a response wave indicative of a type of the consumable upon exposure to an energy wave transmitted to the consumable by the transmitter of the tool.

In a preferred embodiment, the wave modifier comprises a pigment, or luminescent pigment, such as a fluorescent or phosphorescent pigment. In further preferred embodiments, the wave modifier is attached, e.g. tagged to the rest of the consumable. In even further preferred embodiments, the wave modifier is created by an electrical, mechanical, thermal and/or chemical treatment of the consumable, in particular a surface of the consumable.

In another preferred embodiment, the consumable comprises a fastening element such as a screw, a nail, a bolt, a rivet, a clip or a pin, or an energy carrier such as a gas, liquid or solid state propellant, or a cartridge filled with an energy carrier, or a drill, diamond core drill, chisel, or saw blade. In another preferred embodiment, the consumable further has a container or collation element such as a paper or plastic strip comprising the wave modifier.

### Brief Description of the Several Views of the Drawing

Further aspects and advantages of the fastening tool, associated parts and a method of use thereofwill become apparent from the ensuing description that is given by way of example only and with reference to the accompanying drawings in which:
- Fig. 1: illustrates a side view of a driving device,
- Fig. 2: illustrates a side view of the driving device with opened housing, and
- Fig. 3: illustrates a schematic view of a transmitter/receiver device and a consumable.

### Detailed Description of the Invention

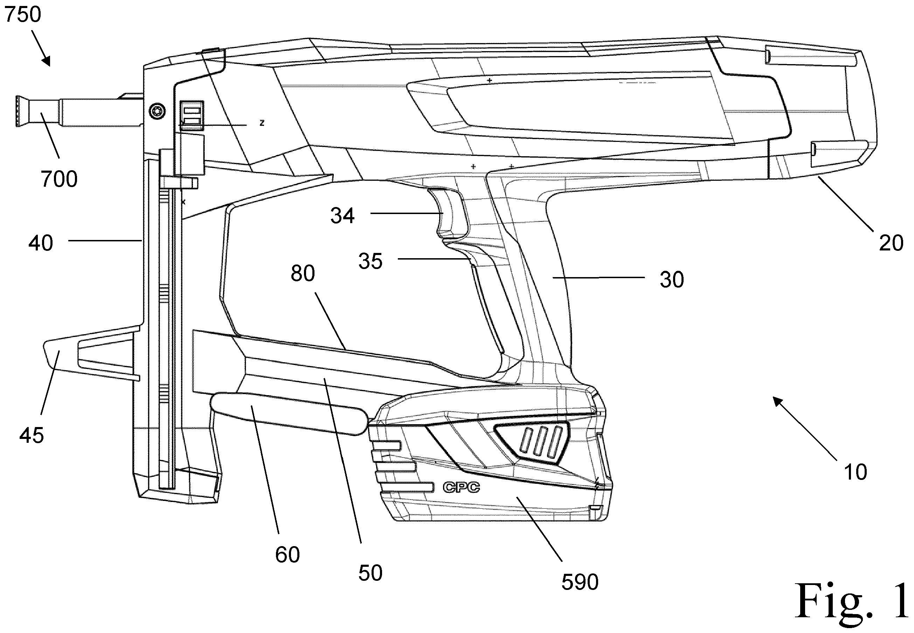

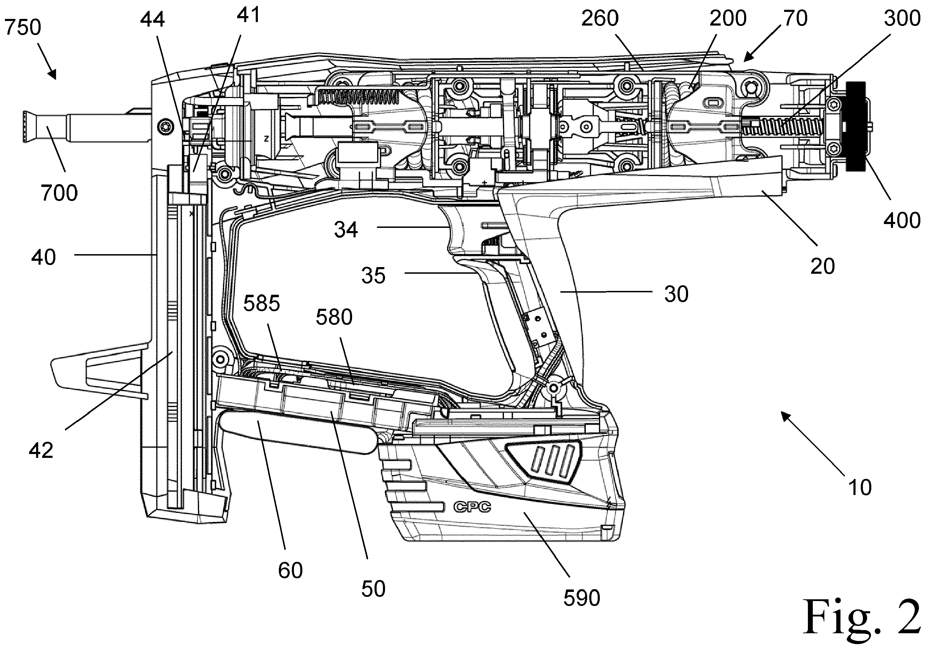

Fig. 1 shows a tool, or driving tool 10 for driving a fastening element, e.g. a nail or bolt, into a substrate in a side view. The driving tool 10 has a driving piston for driving a fastening element into a substrate, and a housing 20 accommodating the driving piston and an actuating device for actuating the driving piston. The driving tool 10 has a grip 30, a magazine 40 and a bridge 50 connecting the grip 30 to the magazine 40. A scaffold hook 60 for hanging the driving tool 10 on a scaffold or the like, a controller 580, signal lines 585 and an electrical battery 590 are fastened to the bridge 50. A trigger 34 and a hand switch 35 are arranged on the grip 30. The driving tool 10 further has a guide channel 700 for guiding the fastening element and a press- on probe 750 for detecting a pressing the driving tool 10 on the substrate. The guide channel 700 comprises a feed channel (not shown) for manually feeding single fastening elements, such as nails, into a receptacle (shown in Fig. 2). An alignment of the driving tool 10 perpendicular to a surface of the substrate is supported by a support element 45.

Fig. 2 shows the driving tool 10 with opened housing 20. An actuating device 70 for actuating the driving piston is accommodated in the housing 20. The actuating device 70 comprises an electric motor for converting electrical energy from the electrical battery 590 into rotational energy, a transmission 400 for transferring a torque of the electric motor to a spindle drive 300, a roll train 260 for transmitting a force from the spindle drive 300 to a spring 200 and for transmitting a force from the spring 200 to the driving piston.

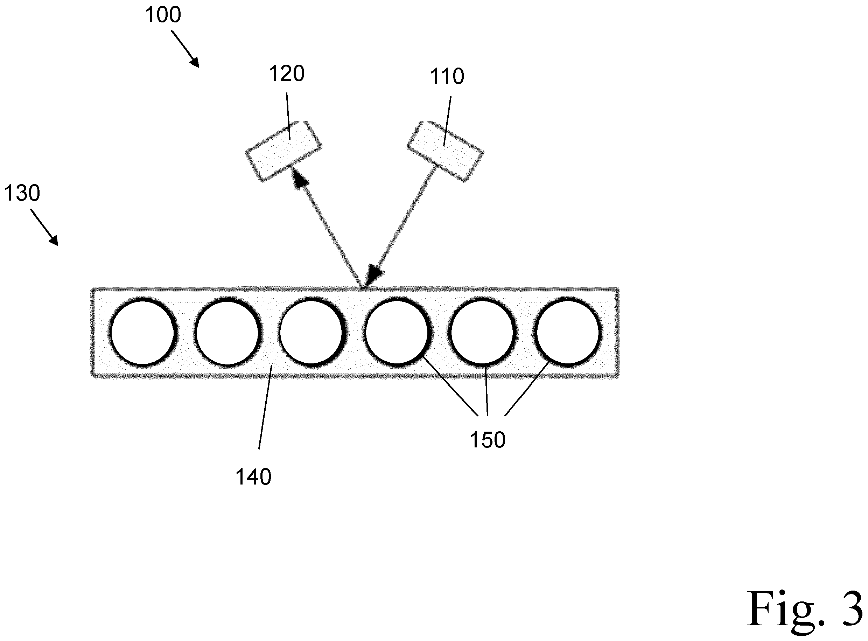

The magazine 40 comprises a feed channel 42 that opens into a receptacle 44 which is configured to temporarily receive a fastening element. Associated to the magazine 40, or mounted to the magazine 40 is a transmitter/receiver device 41 (exemplarily shown in more detail in Fig. 3). The transmitter/receiver device comprises a transmitter configured to transmit an energy wave onto a consumable located in the feed channel 42 or in the receptacle 44, a receiver configured to receive a response wave emitted by the consumable upon exposure to the energy wave and to generate a signal indicative of the response wave. The signal is transmitted from the receiver to the controller 580 via the signal lines 585, wherein the controller is configured to recognize a type of the consumable upon receipt of the signal. Further, the driving tool 10 comprises a display 80 to output information about the recognized type of the consumable. As mentioned above, the controller recognizes a type of the consumable upon receipt of the signal from the receiver. To this end, the controller comprises a microprocessor arranged on a control board. An identification algorithm program is installed on the microprocessor that analogously or digitally processes the signal to derive a modification of the response wave with respect to the energy wave, such as a change of wave form, magnitude or wavelength, and to assign the modification to the type of the consumable.

The controller 580 is further configured to control an operation of the driving tool 10. In particular, the controller 580 automatically adjusts and/or regulates a voltage, an amperage and/or a power of the electric motor, an energy and/or a speed of the driving piston, in dependence of the recognized type of the consumable. The recognized type of the consumable includes a length of the consumable and an application which the consumable is configured to be used for, such as a 15 mm stud to be driven into steel, or a 40 mm nail to be driven into wood. As a precautionary measure, the controller 580 may operate the tool at reduced power or even prevent or abort operation of the tool if it does not recognize the type of the consumable. The controller 580 is further configured to store the recognized type of the consumable in a data storage. The data storage may be arranged on the control board of the controller 580, externally to the controller 580 on the driving tool 10, or externally to the driving tool 10.

Further, the driving tool 10 comprises several output devices, such as the display 80, that output the recognized type of the consumable, a number of consumables left, a depletion state of the magazine 40, and replenishment requests, if applicable. The output devices include, apart from the display 80, a LED for optically displaying the information, a buzzer for acoustically displaying the information, and a wireless transmitter. The wireless transmitter transmits data about the recognized type of the consumable via Bluetooth, NFC, infrared, WLAN, Wi-Fi, and GPS. Alternatively, or additionally, an on-board data storage may be read out by an external device. The outputted information is sent to a user of the tool or a manufacturer or retailer of the tool or to a database server, such as a cloud server. In a preferred embodiment, the replenishment requests are, e.g. after approval by the user, sent to the manufacturer or retailer to automatically refill the stock of the user without the need of a separate user's request. To this end, a number of consumables consumed is monitored by the controller 580 and included in the stored and/or transmitted information.

Fig. 3 shows a transmitter/receiver device 100, such as the transmitter/receiver device 41 shown in Figs. 1 and 2, comprising a transmitter 110 and a receiver 120, such as an electromagnetic, e.g. inductive, optical or acoustic sensor, and a consumable 130 having a collation element formed as a carrier strip 140 carrying a plurality of fastening elements 150. The carrier strip 140 is made of a plastic or paper having a wave modifier, such as fluorescent pigments distributed in a bulk material of the carrier strip 140. The wave modifier emits a response wave indicative of a type of the consumable upon exposure to an energy wave. The pigments are exposed to an electromagnetic, or optic, energy wave transmitted by the transmitter 110. The pigments absorb such energy wave and immediately emit a response wave at a different, in particular lower frequency than the energy wave. Such modification of the response wave with respect to the energy wave indicates a type of the fastening elements 150, e.g. their length and/or the application which they are configured to be used for. In non-shown embodiments, single consumables, e.g. fasteners, comprise a wave modifier, such as pigments or color dots, on a part of the single consumables, e.g. on a metal part such as a shaft or a head of the fastener. The wave modifier may be attached, e.g. tagged to the rest of the consumable. In further embodiments, the wave modifier may be created by an electrical, mechanical, thermal and/or chemical treatment of the consumable, or a surface of the consumable.

The foregoing exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A tool comprising a receptacle configured to temporarily receive a consumable, a feed channel configured to guide consumables into the receptacle, a controller configured to control an operation of the tool, a transmitter configured to transmit an energy wave onto a consumable located in the feed channel or in the receptacle, a receiver configured to receive a response wave emitted by the consumable upon exposure to the energy wave and to generate a signal indicative of the response wave, a signal line configured to transmit the signal from the receiver to the controller, wherein the controller is configured to recognize a type of the consumable upon receipt of the signal and to at least one of control the operation of the tool in dependence of the recognized type of the consumable and store the recognized type of the consumable in a data storage.

2. The tool according to claim 1, wherein the controller is configured to derive a modification of the response wave with respect to the energy wave from the signal and to assign the modification to the type of the consumable.

3. The tool according to any of the preceding claims, wherein the receiver comprises an electromagnetic sensor, or optical sensor.

4. The tool according to any of the preceding claims, wherein the receiver comprises an acoustical sensor.

5. The tool according to any of the preceding claims, wherein the controller is configured to operate the tool at reduced power or to prevent or abort operation of the tool if the type of the consumable is not recognized.

6. The tool according to any of the preceding claims, further comprising an output device configured to output the recognized type of the consumable.

7. The tool according to claim 6, wherein the output device comprises at least one of a display, a LED, a buzzer, and a wireless transmitter.

8. The tool according to any of the preceding claims, wherein the tool is a driving tool having a driving piston and an actuating device configured to actuate the driving piston such that the driving piston drives a fastening element into a substrate.

9. A method of operating a tool that comprises a receptacle configured to temporarily receive a consumable, and a feed channel configured to guide consumables into the receptacle, the method comprising transmitting an energy wave onto a consumable located in the feed channel or in the receptacle, receiving a response wave emitted by the consumable upon exposure to the energy wave, generating a signal indicative of the response wave, recognizing a type of the consumable upon receipt of the signal and at least one of controlling an operation of the tool in dependence of the recognized type of the consumable and storing the recognized type of the consumable in a data storage.

10. The method according to any of the preceding claims, wherein the tool is a driving tool having a driving piston and an actuating device configured to actuate the driving piston such that the driving piston drives a fastening element into a substrate.

11. The method according to any of the preceding claims, further comprising outputting the recognized type of the consumable.

12. A consumable configured to be used in a tool according to any of the preceding claims, comprising a wave modifier configured to emit a response wave indicative of a type of the consumable upon exposure to an energy wave transmitted to the consumable by the transmitter of the tool.

13. The consumable according to claim 12, wherein the wave modifier comprises a pigment, or luminescent pigment.

14. The consumable according to any of claims 12 to 13, comprising a fastening element or an energy carrier.

15. The consumable according to any of claims 12 to 14, further having a container or collation element comprising the wave modifier.
